# EUROPEAN PATENT SPECIFICATION

(11) **EP 2 981 437 B1**
(45) Date of publication and mention of the grant of the patent: **15.03.2017**
(21) Application number: 14724132.7
(22) Date of filing: 15.04.2014
(51) Int. Cl.: B60R 11/02, B60N 3/00, B60R 11/00

(54) **DISPLAY SCREEN MOUNTING**
BILDSCHIRMBEFESTIGUNG
FIXATION D'ÉCRAN

(30) Priority: 17.04.2013 GB 201306998
(43) Date of publication of application: 10.02.2016
(73) Proprietor: Bentley Motors Limited, Crewe, Cheshire CW1 3PL (GB)
(72) Inventor: ROOK, David, Alan, Crewe Cheshire CW1 3PL (GB); WILSON, Philip, Crewe Cheshire CW1 3PL (GB)
(74) Representative: Wilson Gunn
(86) International application number: PCT/GB2014/051174
(87) International publication number: WO 2014/170659

(56) References cited:
- WO-A1-00/02745
- WO-A1-2009/098381
- WO-A2-2007/016613
- CN-B- 101 098 601
- DE-U1-202012 100 251
- US-A1- 2006 006 093
- US-A1- 2006 075 934
- US-A1- 2008 196 201

## Description

This invention relates to a display screen surface-mounting structure, and surface to which a display screen is mounted. The invention further relates to a vehicle seat table comprising a rotatable mounted display screen.

It is known to mount display screens, such as audio visual display screens and touch screen displays to the rear of vehicle seat. The display screen can be mounted directly to the backrest, or headrest, of a vehicle seat, in a fixed fashion or in which a user may adjust the viewing angle of the display by pushing or pulling the display screen about a rotational axis. In some vehicles, such as aircraft and other passenger carrying vehicles, it is known to mount a display screen to an interior surface of the vehicle such as the interior roof surface, and the display screen may be in a fixed position, or mounted such that it may be electrically stowed and rotated to a viewable position as and when required.

In other vehicles, tables are provided mounted on the back of a seat, or within an arm rest of a seat, and which must be deployed and stowed by a user as and when required. It is known to mount a display screen on such tables, such that in use, when the table is deployed, the user may manually rotate the display screen to a visible orientation.

With electrically operated display screen rotation, one advantage is that electrical rotation of the screen enables repeatable and secure rotation of the screen to a desired position. A disadvantage of electrically driven rotational display screen systems is the fixed nature of the mechanism, such that the screen is rotated to a predetermined final position, which may not be optimal for a user. For example different passengers within a vehicle will have different heights, or preferred seating positions, and differences in height or seating position may make the viewing angle of a predetermined display screen position sub-optimal. On the other hand, while manual rotation of display screens mitigates some of the aforementioned problems with electrically driven systems, manual systems tend to be less sturdy, and prone to inadvertent movement due to vibration or other vehicle motion. This can lead to a passenger needing to continually or periodically adjust the display screen during use.

Embodiments of the present invention have been made in consideration of these problems, with a view to mitigating or alleviating them.

CN101098601B discloses an arrangement for mounting a display screen in a vehicle and allowing rotational movement of the screen. The arrangement comprises an electric motor connected to the screen by a damping block allowing the motor to drive the screen, but allowing independent movement of the screen relative to the motor if sufficient force is applied to the screen.

According to a first aspect of the present invention there is provided a display screen surface-mounting structure comprising a display screen connector, a surface connector for connecting the structure to a surface in use, and a rotational movement mechanism for rotation of an attached display screen in use, wherein the display screen connector comprises a first connector (111) and a second connector (113), and the rotational movement mechanism comprises an electric drive, a manual rotational adjustment mechanism and a first damper arranged to be connected to one side of a connected display screen by the first connector in use and further comprising a second damper arranged to be connected to an opposite side of a connected display screen by the second connector, in use, and wherein the second damper is operably connected to the electric drive and has a higher damping force than the first damper.

The display screen surface-mounting structure enables a display screen to be mounted to a suitable surface, and which enables electric rotation of the display screen to a predetermined position, and further manual rotational adjustment by a user if desired.

The display screen connector may comprise a clamp. The clamp may, in use, be arranged to connect a display screen to the surface-mounting structure in any suitable configuration. In some embodiments the display screen connector is arranged to connect to an upper or lower edge of a display screen, such that in use rotation of at least a part of the surface mounting structure effects rotation of the display screen about an axis running parallel with the upper or lower edge of the display screen.

The first and second connectors may comprise the first and second dampers, which may be a rotary damper. At least one of the dampers may be connected to a motor drive.

In some embodiments, the first and second connectors comprise the respective first and second damper, and the second connector further comprises a motor drive connected to the second damper. As the second damper connected to the motor provides a higher damping force than the first damper, when the motor operates it may apply a force to the an attached display screen, which overcomes the damping force of the damper on the other connector, thereby ensuring display screen movement. When a user manually adjusts the display screen, the motor does not move, and a user must overcome the higher damping force involved in moving both dampers. This arrangement provides an appropriate (higher) level of damping which much be overcome to allow manual adjustment, and a lower damping force for the motor drive to overcome. In some embodiments, mounting of a display screen to a display screen surface-mounting structure of an embodiment of the invention, which includes dampers on both the first and second connectors, prevents or reduces vibration of the display screen in use.

In some embodiments, the damper connected to the motor drive includes a stop which limits relative rotation between the two sides of the damper to less than 15° or less than 10°. In this way, manual adjustment is limited to less than 15° or 10°. In some embodiments there are no stops connected to a damper which is not connected to a motor drive.

The motor drive may be configured to enable rotational movement of a display screen, using the screen surface-mounting structure, to rotate no more than 120°, or 110°. This configuration ensures that when an attached display screen is rotated to a stowed position, the drive through the connected damper turns the motor side of the damper to a point where it reaches the end stop with the display screen in a closed position, in use.

The surface connector may comprise a clamp, arranged in use, to connect to a surface. Alternatively, in some embodiments the surface connector may be arranged integrally with a surface, such that the surface-mounting structure is formed with the surface.

According to a second aspect of the invention there is provided a surface comprising a display screen surface-mounting structure of the first aspect of the invention.

In some embodiments the surface-mounting structure comprises a switch, which is activated to rotate the display screen from a first, stowed position and a second, deployed position by way of the electric drive. In use, a user may activate the switch, in order to activate the electric drive, and move the display screen from the first, stowed position to the second, deployed position. A user may then manually adjust the rotation of the display screen to a desired position, by manipulating the display screen manually, which activates the manual rotational adjustment mechanism. When it is desired to stow the display screen again, a user may activate the switch, at which point the electric drive effects rotation of the screen from the second, deployed position to the first, stowed position.

The surface may comprise a surface of a table, wall of a vehicle, wall of a building or any other suitable surface. In some embodiments the surface is a surface of a table located in a vehicle, and which may be mounted on the back of a vehicle seat. The vehicle seat table may be rotatable from a stowed position to a deployed position by any suitable mechanism.

The surface may include one or more cavities or compartments in which items may be stored. The opening of the or each cavity or compartment may be covered by the display screen in the stowed position. A cavity or compartment may comprise a keyboard, mouse or other computer peripheral item, for example.

The display screen surface-mounting structure may be connected directly or indirectly to the surface, or may be integrally formed with the surface.

According to a third aspect of the invention there is provided a vehicle seat table comprising a display screen surface-mounting structure of the first aspect of the invention. The vehicle seat table may be described as herein.

According to a fourth aspect of the invention there is provided a method of mounting a display screen to a surface, the method comprising providing a display screen surface-mounting structure of the first aspect of the invention, connecting the display screen surface-mounting structure to a surface, and connecting the display screen surface-mounting structure to a display screen. The display screen surface-mounting structure may be connected to the display screen and the surface in any suitable order, which may depend on the structure of the display screen and surface.

The display screen surface-mounting structure is particularly advantageous in relation to vehicle seat tables, and mounting display screens thereon. Tables connected to vehicle seats when deployed in a horizontal position, are affected by the rotational angle and height of the vehicle seat to which they are mounted. Depending on the angle of the seat which they are mounted, and the subsequent height of the table from the vehicle floor, any predetermined position of a mounted display may not give optimal viewing angles to a user. The ability to manually adjust the rotation of a display screen on a vehicle table overcomes this problem, whilst the electrical drive mechanism enables efficient and secure stowing and deploying of the display screen.

The various aspects of the invention are now described in greater detail, by way of example only with reference to the accompanying drawings, in which:
Figure 1 is a top-down view of a surface mounting structure of the invention, connected to a screen.
Figures 2, 3 and 4 show sequential operation of a display screen surface-mounting structure of the invention connected to a vehicle seat table and a display screen.

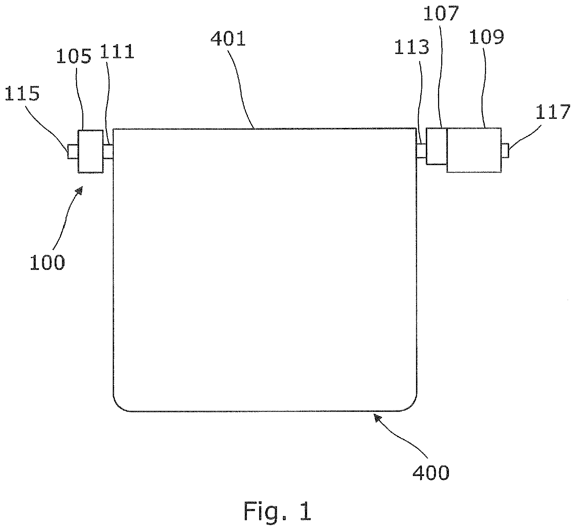

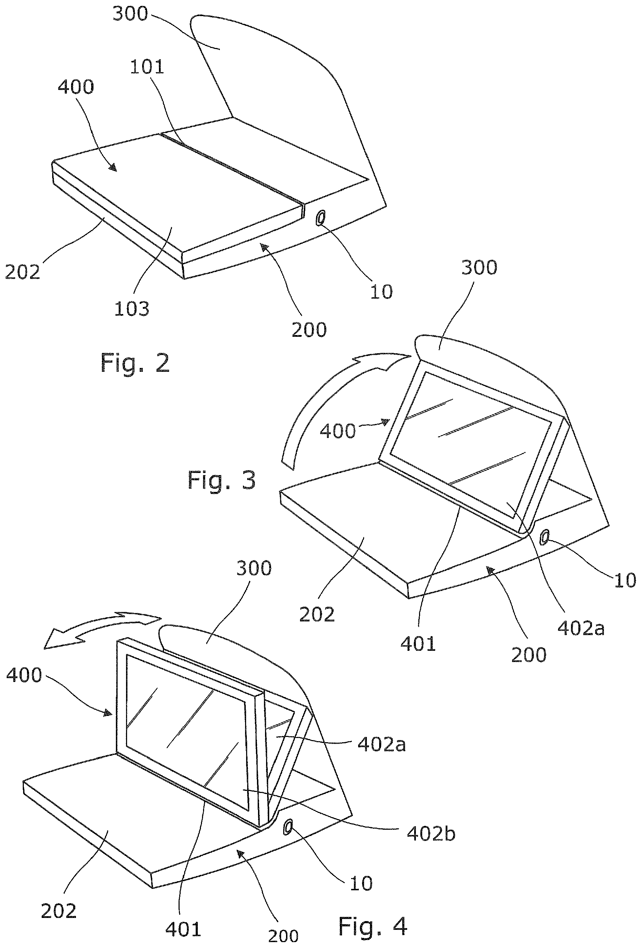

Referring firstly to Figure 1, a display screen surface-mounting structure (100) of the invention includes a first (111) and second (113) display screen connector, connected to a display screen (400) in the region close to a bottom edge (401) of the screen. The display screen surface-mounting structure (100) also includes a first damper (105) and a second damper (107) connected to the first and second display screen connectors (111, 113). Connected outside of the second damper (107) is a motor drive (109). The first damper (105) is also connected to a surface connector (115), and the motor (109) is connected to a second surface connector (117). In use, the display screen (400) is connected to the display screen surface-mounting structure (100), via the first and second connectors (111, 113). The display screen surface-mounting structure (100) is mounted in a seat table, as shown by reference numeral (200) in Figures 2-4, via the surface connectors (115) and (117).

Referring now to Figures 2, 3 and 4, which illustrate sequential operation of a display screen surface-mounting structure of the present invention, connected to a vehicle seat table (200). The seat table (200) is rotatably mounted on the rear of a vehicle seat (300). The seat table (200) is orientated such that a suitable display screen (400) can be mounted thereon in a stowed configuration, as shown in Figure 2. The display screen (400) is connected such that it may rotate about an axis of rotation around a bottom edge (401) of the display screen (400). The bottom edge (401) is connected to the display screen surface mounting structure as described above.

In use, the display screen may be moved from a stowed position, as shown in Figure 2, in which the visible display screen surface (402) (as shown in figures 3 and 4) lies flush with an upper surface (202) of the table (200). When a user requires to view the display screen (400), button (10) is pressed, which activates the electric drive mechanism of the display screen surface mounting structure, to rotate to display screen (400) from the stowed position as shown in Figure 2 to the deployed position as shown in Figure 3 in which the visible display surface (402a) faces the user. The electric motor drive (109) and second damper (107) ensure smooth rotation, and are arranged to rotate the display screen around 110°. At this point, the display screen (400) is in the position shown in Figure 3, which, depending on the angle of the seat (300), and the seating position of a user, may not be the optimal position for effective viewing of the visible display screen (402a). If the optimal position is not obtained, a user may manually adjust the position of the display screen (400), by manipulating the screen, and manually rotating it about the bottom edge (401). Manual rotation effects decoupling of the electric drive, and activation of the manual rotational adjustment mechanism provided by the dampers (105) and (107) of the display screen surface-mounting structure (100) in order to rotate the display screen to an optimal visible display screen viewing position, as shown by reference numeral (402b) in Figure 4. The second damper (107) connected to the motor drive (109) has a higher damping force than the first damper (105) on the opposite edge of the screen (400). In this way when the motor drive (109) operates it applies a force to the display screen (400) which overcomes the damping force of the first damper (105), and the screen moves. When a user manually adjusts the screen (400), the motor drive (109) does not move, and the user has to overcome the higher damping force involved in moving both first (105) and second (107) dampers, thereby allowing an appropriate higher level of damping which must be overcome to allow manual adjustment.

Finally, when a user has finished viewing the display screen (400), it can be moved back to the stowed position shown in Figure 1, by activation of the button (10), which in turn activates the electric drive to rotate the display screen (400) to the stowed position.

In preferred embodiments, the display screen (400) is a tablet computer, smart-phone or other electronic multi-media device. For example, the display screen (400) may be a display screen of an iPAD (RTM) tablet computer or other suitable tablet computer. The vehicle seat table (200) may include electrical connections for in-vehicle charging of a connected device, and/or connection of the device to further display screens within the vehicle. The display screen (400) may include a protective cover, which functions to protect the outer surface of the display screen from abrasive damage, and/or damage from food and beverage spillage. The protective cover may cover the rear surface of the display screen (400), such that in the stowed position, the rear surface is protected. The protective cover may alternatively or additionally cover the visible display screen (402), and any other surfaces or edges of the display screen.

The display screen (400) may be releasably connected to the display screen surface-mounting structure (100) such that it can be removed and attached by the user at their convenience. Alternatively, the display screen may be fixedly attached to the display screen surface-mounting structure (100), such that the display screen is an integral part of the vehicle seat or surface to which it is attached.

Whereas the invention has been described in relation to what is presently considered to be the most practical and preferred embodiments, it is to be understood that the invention is not limited to the disclosed arrangements but rather is intended to cover various modifications and equivalent constructions included within the scope of the invention. In this respect, it should also be noted that the invention could be applied to surfaces, vehicles and display screens having different constructions from that shown in the examples.

Where the term "comprise", "comprises", "comprised" or "comprising" are used in the specification, they are to be interpreted as specifying the presence of the stated features, integers steps or components referred to, but not to preclude the presence or addition of one or more other features, integers, steps, components or groups thereof.

## Claims

1. A display screen (400) surface-mounting structure (100) comprising a display screen connector (111, 113), a surface connector (115, 117) for connecting the structure to a surface in use and a rotational movement mechanism for rotation of an attached display screen in use, wherein the display screen connector comprises a first connector (111) and a second connector (113), and the rotational movement mechanism comprises an electric drive (109), a manual rotational adjustment mechanism and a first damper (105) arranged to be connected to one side of a connected display screen by the first connector in use, wherein a second damper (107) is arranged to be connected to an opposite side of a connected display screen by the second connector in use, and the second damper is operably connected to the electric drive and has a higher damping force than the first damper.

2. A display screen surface-mounting structure as claimed in claim 1 wherein the second damper includes a stop which limits relative rotation between opposite sides of the damper to less than 15°.

3. A display screen surface-mounting structure as claimed in claim 1 or 2 comprising a switch (10), activated in use to rotate the display screen between a first, stowed position and a second, deployed position by way of the electric drive.

4. A surface comprising a display screen surface-mounting structure of any one of claims 1 to 3.

5. A surface as claimed in claim 4 comprising a table (200).

6. A surface as claimed in claim 4 or 5 wherein the surface includes one or more cavities in which items may be stored.

7. A surface as claimed in claim 6 wherein the cavity comprises a keyboard.

8. A vehicle seat table (200) comprising a display screen surface-mounting structure of any one of claims 1 to 3.

9. A vehicle seat table as claimed in claim 8 wherein the display screen comprises the display screen of a tablet computer, mobile phone or laptop computer.

10. A vehicle seat table as claimed in claim 8 or 9 wherein the display screen is mounted for rotation about an axis running parallel with an upper or lower edge of the display screen.

11. A method of mounting a display screen (400) to a surface (200), the method comprising providing a display screen surface-mounting structure (100) of any one of claims 1 to 3, connecting the display screen surface-mounting structure to a surface, and connecting the display screen surface-mounting structure to a display screen (400).

12. A method as claimed in claim 11 wherein the surface is a vehicle table surface (200).

## Patentansprüche

1. Bildschirmflächenbefestigungsstruktur (400, 100), aufweisend einen Bildschirmverbinder (111, 113), einen Flächenverbinder (115, 117) zum Verbinden der Struktur mit einer Fläche in Verwendung und einen Rotationsbewegungsmechanismus zur Rotation eines daran angefügten Bildschirms in Verwendung, wobei der Bildschirmverbinder einen ersten Verbinder (111) und einen zweiten Verbinder (113) aufweist, und der Rotationsbewegungsmechanismus einen elektrischen Antrieb (109), einen händisch bedienbaren Rotationsjustierungsmechanismus und einen ersten Dämpfer (105), angeordnet zum Verbinden mit dem ersten Verbinder an einer Seite eines verbundenen Bildschirms in Verwendung, aufweist, wobei ein zweiter Dämpfer (107) zum Verbinden mit dem zweiten Verbinder an einer gegenüberliegende Seite eines damit verbundenen Bildschirms in Verwendung angeordnet ist, und der zweite Dämpfer ausführbar mit dem elektrischen Antrieb verbunden ist und dabei eine höhere Dämpfungswirkung als der erste Dämpfer hat.

2. Bildschirmflächenbefestigungsstruktur nach Anspruch 1, wobei der zweite Dämpfer einen Anschlag aufweist, welcher die Rotation relativ zueinander zwischen gegenüberliegenden Seiten des Dämpfers auf weniger als 15° begrenzt.

3. Bildschirmflächenbefestigungsstruktur nach Anspruch 1 oder 2, aufweisend einen Schalter (10), der bei Benutzung aktiviert ist, um den Bildschirm zwischen einer ersten verstauten Position und einer zweiten Position in Verwendung mittels des elektrischen Antriebs zu rotieren.

4. Fläche, aufweisend eine Bildschirmflächenbefestigungsstruktur nach einem der Ansprüche 1-3.

5. Fläche nach Anspruch 4, aufweisend einen Tisch (200).

6. Fläche nach Anspruch 4 oder 5, wobei die Fläche einen oder mehr Hohlräume aufweist, in denen Objekte verstaut werden können.

7. Fläche nach Anspruch 6, wobei der Hohlraum eine Tastatur aufweist.

8. Fahrzeugsitztisch (200), aufweisend eine Bildschirmflächenbefestigungsstruktur nach einem der Ansprüche 1-3.

9. Fahrzeugsitztisch nach Anspruch 8, wobei der Bildschirm den Bildschirm eines Tablet-Computers, eines Mobiltelefons, oder eines Laptop-Computers aufweist.

10. Fahrzeugsitztisch nach Anspruch 8 oder 9, wobei der Bildschirm für eine Rotation um eine Achse angebracht ist, die parallel zu einer oberen oder unteren Kante des Bildschirms verläuft.

11. Verfahren zur Montage eines Bildschirms (400) an einer Fläche (200), das Verfahren dabei aufweisend die Bereitstellung einer Bildschirmflächenbefestigungsstruktur (100) nach einem der Ansprüche 1-3, die Verbindung der Bildschirmflächenbefestigungsstruktur mit einer Fläche, und die Verbindung der Bildschirmflächenbefestigungsstruktur mit einem Bildschirm (400).

12. Verfahren nach Anspruch 11, wobei die Fläche eine Fahrzeugtischfläche (200) ist.

## Revendications

1. Structure de montage en surface (100) d'un écran d'affichage (400) comprenant un connecteur d'écran d'affichage (111, 113), un connecteur à une surface (115, 117) pour connecter la structure à une surface en utilisation et un mécanisme de mouvement rotatif pour une rotation d'un écran d'affichage fixé en utilisation, dans laquelle le connecteur d'écran d'affichage comprend un premier connecteur (111) et un second connecteur (113), et le mécanisme de mouvement de rotation comprend un entraînement électrique (109), un mécanisme de réglage de rotation manuel et un premier amortisseur (105) agencé pour être connecté à un côté d'un écran d'affichage connecté par le premier connecteur en utilisation, dans laquelle un second amortisseur (107) est agencé pour être connecté à un côté opposé d'un écran d'affichage connecté par le second connecteur en utilisation, et le second amortisseur est connecté de manière opérationnelle à l'entraînement électrique et a une force d'amortissement supérieure au premier amortisseur.

2. Structure de montage en surface d'un écran d'affichage selon la revendication 1, dans laquelle le second amortisseur inclut un butoir qui limite une rotation relative entre des côtés opposés de l'amortisseur à moins de 15°.

3. Structure de montage en surface d'un écran d'affichage selon la revendication 1 ou 2, comprenant un commutateur (10), activé en utilisation pour faire tourner l'écran d'affichage entre une première position, rangée, et une seconde position, déployée, au moyen de l'entraînement électrique.

4. Surface comprenant une structure de montage en surface d'écran d'affichage selon l'une des revendications 1 à 3.

5. Surface selon la revendication 4 comprenant une tablette (200).

6. Surface selon la revendication 4 ou 5, dans laquelle la surface inclut une ou plusieurs cavités dans lesquelles des éléments peuvent être rangés.

7. Surface selon la revendication 6, dans laquelle la cavité comprend un clavier.

8. Tablette de siège de véhicule (200) comprenant une structure de montage en surface d'écran d'affichage selon l'une des revendications 1 à 3.

9. Tablette de siège de véhicule selon la revendication 8, dans laquelle l'écran d'affichage comprend l'écran d'affichage d'une tablette électronique, d'un téléphone mobile ou d'un ordinateur portatif.

10. Tablette de siège de véhicule selon la revendication 8 ou 9, dans laquelle l'écran d'affichage est monté pour une rotation autour d'un axe s'étendant parallèlement à un bord supérieur ou inférieur de l'écran d'affichage.

11. Procédé de montage d'un écran d'affichage (400) sur une surface (200), le procédé comprenant la fourniture d'une structure de montage en surface d'écran d'affichage (100) selon l'une des revendications 1 à 3, le raccordement de la structure de montage en surface d'écran d'affichage à une surface, et le raccordement de la structure de montage en surface d'écran d'affichage à un écran d'affichage (400).

12. Procédé selon la revendication 11, dans lequel la surface est une surface de tablette de véhicule (200).
